(19) Europäisches Patentamt
European Patent Office
Office européen des brevets

(11) **EP 1 934 630 B1**

(12) **EUROPÄISCHE PATENTSCHRIFT**

(45) Veröffentlichungstag und Bekanntmachung des Hinweises auf die Patenterteilung:
**26.02.2014 Patentblatt 2014/09**

(21) Anmeldenummer: 06792874.7

(22) Anmeldetag: **17.08.2006**

(51) Int Cl.:
*G01S 13/93* $^{(2006.01)}$        *G01S 15/93* $^{(2006.01)}$

(86) Internationale Anmeldenummer:
**PCT/EP2006/065397**

(87) Internationale Veröffentlichungsnummer:
**WO 2007/036395 (05.04.2007 Gazette 2007/14)**

(54) **VORRICHTUNG UND VERFAHREN ZUR UNTERSTÜTZUNG EINES EINPARKVORGANGS EINES FAHRZEUGS**

DEVICE AND METHOD FOR ASSISTING A PARKING PROCESS OF A VEHICLE

DISPOSITIF ET PROCEDE POUR ASSISTER UN PROCESSUS DE STATIONNEMENT D'UN VEHICULE

(84) Benannte Vertragsstaaten:
**DE FR GB IT**

(30) Priorität: **27.09.2005 DE 102005046054**

(43) Veröffentlichungstag der Anmeldung:
**25.06.2008 Patentblatt 2008/26**

(73) Patentinhaber: **ROBERT BOSCH GMBH**
**70442 Stuttgart (DE)**

(72) Erfinder: **FABER, Petko**
**71229 Leonberg (DE)**

(56) Entgegenhaltungen:
EP-A- 0 305 907        EP-A- 1 484 620
EP-A- 1 614 585        EP-A- 1 643 270
WO-A-2005/121834        DE-A1- 10 320 723
DE-A1- 10 339 645

**Beschreibung**

Stand der Technik

Die Erfindung betrifft eine Vorrichtung zur Unterstützung eines Einparkvorgangs eines Fahrzeugs, insbesondere eines Kraftfahrzeugs, in eine Parklücke mit einer zwei in Fahrtrichtung hintereinander an dem Fahrzeug angeordnete, einen Bereich seitlich des Fahrzeugs erfassende abstandsmessende Sensoren aufweisenden Sensoranordnung zu einem Vermessen der Parklücke während eines Vorbeifahrens des Fahrzeugs an der Parklücke. Darüber hinaus betrifft die Erfindung ein Verfahren zur Unterstützung eines Einparkvorgangs eines Fahrzeugs, insbesondere eines Kraftfahrzeugs, in eine Parklücke, wobei die Parklücke während eines Vorbeifahrens des Fahrzeugs an der Parklücke von einer Sensoranordnung vermessen wird.

Eine ständig zunehmende Dichte des Kraftfahrzeugverkehrs und eine intensive Bebauung freier Flächen engen den zur Verfügung stehenden öffentlichen Verkehrsraum insbesondere in Ballungszentren fortlaufend ein. Neben dichtem fließenden Verkehr wird ein Fahrer eines Kraftfahrzeugs vor allem durch das Suchen eines geeigneten Parkplatzes für sein Fahrzeug und - nach vermeintlichem Auffinden eines solchen Parkplatzes - durch das regelmäßig aufwendige Einparken, das üblicherweise aufgrund einer nur groben, auf Erfahrungswerten beruhenden Abschätzung der Parklückengröße nach der Versuchs-und-Irrtums-Methode durchgeführt wird, belastet. Zur Entlastung des Fahrers ist bereits eine Einrichtung unter dem Begriff Parklückenlokalisierung, für die eine andere Bezeichnung Parking Space Localization (PSL) ist und die den Fahrer des Kraftfahrzeugs bei der Suche nach einer ausreichend großen Parklücke für sein Fahrzeug unterstützt, bekannt.

Die Parklückenlokalisierung kann mit einem System zum semi-autonomen Einparken entsprechend einer Vorrichtung der oben genannten Art zusammenarbeiten, bei dem der Fahrer Fahr- und Bremspedal des Fahrzeugs bedienen muss, wohingegen das Lenken auch automatisch ausgeführt werden kann. Das System berechnet eine vorgeblich optimale Bahnkurve für das Einparken des Fahrzeugs und informiert den Fahrer, zum Beispiel mit Hilfe von akustischen Signalen, über die Aktionen, die er auszuführen hat, um das Fahrzeug bestmöglich in der Parklücke abzustellen. Ein Grundsatz dabei ist, dass das Fahrzeug im Bereich der Parklücke befindliche Objekte nicht touchieren oder gar überfahren darf, wenn dadurch eine Gefahr einer Beschädigung des Objektes und/oder des parkenden Fahrzeugs entstehen könnte.

Eine eingangs genannte Vorrichtung und ein eingangs genanntes Verfahren offenbart DE 103 39 645 A1, wobei eine Bestimmung einer Breite der Parklücke mittels eines ersten Ultraschallsensors mit einer ersten Empfindlichkeit und eine Bestimmung einer Tiefe der Parklücke mittels eines zweiten Ultraschallsensors mit einer zweiten Empfindlichkeit vorgesehen ist, wobei die Empfindlichkeit des ersten Ultraschallsensors geringer ist als die Empfindlichkeit des zweiten Ultraschallsensors. Ein Verifizieren von Messergebnissen des ersten Ultraschallsensors mittels eines zweiten Ultraschallsensors ist mit der bekannten Vorrichtung und nach dem bekannten Verfahren nur in sehr eingeschränktem Umfang möglich; ebenso sind die Möglichkeiten, über geometrische Abmessungen der Parklücke hinaus gehende Aussagen bezüglich der Parklücke zu gewinnen sehr begrenzt.

Aus der EP 1 484 620 A1 ist eine Vorrichtung und ein Verfahren zum Erkennen des Konturverlaufs eines Hindernisses bekannt, bei der mehrfache Reflexionssignale eines ausgesendeten Schallsignals empfangen und diese multiplen Reflexionssignale für eine Abstandsbestimmung zu dem Hindernis ausgewertet werden.

Aus der EP 0 305 907 A1 ist eine Einparkhilfsvorrichtung für Kraftfahrzeuge mit einem an der Fahrzeugaußenseite angeordneten Sender-/Empfänger für ein zumindest annähernd senkrecht abgestrahltes Sende- und sich daraus ergebendes Reflexsignal bekannt. Das Reflexsignal ist einer Vergleichseinrichtung zugeführt, die als weitere Eingangsgröße eine für den zurückgelegten Weg charakteristische Größe erhält. Hierdurch wird die Größe einer Parklücke im Verhältnis zu einer Eigenlänge des Kraftfahrzeugs abgeschätzt.

Weiterhin ist aus DE 103 20 723 A1 eine Messeinrichtung in einem Kraftfahrzeug zur Vermessung von Parklücken sowie ein Verfahren zur Vermessung von Parklücken bekannt. Diese Messeinrichtung umfasst Abstandssensoren, deren Messintervallrate in Abhängigkeit einer Fahrzeuggeschwindigkeit des Kraftfahrzeuges gesteuert wird.

Der Erfindung liegt die Aufgabe zugrunde, eine Vorrichtung der eingangs genannten Art zu schaffen, die eine Unterstützung des Einparkvorgangs mit erhöhter Genauigkeit ermöglicht. Darüber hinaus liegt der Erfindung die Aufgabe zugrunde, ein Verfahren der, eingangs genannten Art anzugeben, das eine präzisere Unterstützung des Einparkvorgangs bietet.

Die erstgenannte Aufgabe wird erfindungsgemäß gelöst mit einer Vorrichtung der eingangs genannten Art, bei der die Empfindlichkeit des in Fahrtrichtung zweiten Sensors in Abhängigkeit von einem Messergebnis des in Fahrtrichtung ersten Sensors einstellbar ist.

Die oben zweitgenannte Aufgabe wird erfindungsgemäß gelöst mit einem Verfahren der eingangs genannten Art, wobei die Parklücke mit einem ersten abstandsmessenden Sensor der Sensoranordnung abgetastet wird, ein Messergebnis des ersten Sensors der Abtastung der Parklücke an eine Auswerteeinheit der Sensoranordnung übermittelt wird, in Abhängigkeit von einer Auswertung des Messergebnisses eine Empfindlichkeit eines zweiten, in Fahrtrichtung des Fahrzeugs hinter dem ersten Sensor angeordneten abstandsmessenden Sensors der Sensoranordnung eingestellt wird und die Parklücke mit dem zweiten Sensor abgetastet wird.

Vorteile der Erfindung

Von besonderem Vorteil ist bei der Erfindung, dass der zweite abstandsmessende Sensor gezielt im Hinblick auf ein zu erwartendes Objekt im Bereich einer potentiellen Parklücke für das an der Parklücke vorbeifahrende, einzuparkende Fahrzeug einsetzbar ist, da das eine konkrete Erwartungshaltung hinsichtlich eines Objektes im Bereich der Parklücke erzeugende Messergebnis des ersten Sensors zu einer entsprechenden Sensibilisierung, nämlich Einstellung der Empfindlichkeit, des zweiten Sensors führt. Mit Hilfe des zweiten Sensors kann vorteilhaft ein mit dem ersten Sensor nur grob erfasstes Objekt genauer untersucht werden. Somit kann der zweite Sensor gleichzeitig sowohl einem Verifizieren des Messergebnisses des ersten Sensors dienen als auch einer Gewinnung zusätzlicher Informationen zum Beispiel über Art und Typ von im Bereich der Parklücke angeordneten Objekten, wobei beispielsweise auch eine Situationsanalyse bezüglich der an und in der Parklücke gegebenen Rahmenbedingungen zum Einparken möglich ist. Der in Fahrtrichtung erste Sensor und der in Fahrtrichtung zweite Sensor stehen untereinander in einer Master-Slave-Anordnung, wobei der erste Sensor ein Master-Sensor und der zweite Sensor ein Slave-Sensor ist; das heißt bei einer Vorwärtsfahrt des Fahrzeugs ist ein vorne am Fahrzeug angebrachter Sensor der Master-Sensor und ein hinten angebrachter Sensor der Slave-Sensor, wohingegen bei einer Rückwärtsfahrt des Fahrzeugs ein hinten am Fahrzeug angebrachter Sensor der Master-Sensor und ein vorne angebrachter Sensor der Slave-Sensor ist. Ein Vermessen der Parklücke durch die Sensoranordnung bedeutet im Sinne der Erfindung nicht zwangsläufig, dass die Parklücke vollständig bezüglich ihrer Länge und Tiefe vermessen wird, sondern lediglich, dass zumindest ein im Zusammenhang mit der Parklücke stehender geometrischer Parameter, beispielsweise der Seitenabstand des vorbeifahrenden Fahrzeugs zu einem im Bereich der Parklücke angeordneten Objekt, gemessen wird. Die Empfindlichkeit eines Sensors steigt beispielsweise mit seiner Abtastrate; eine höhere Abtastrate bedeutet eine höhere Genauigkeit, aber auch eine geringere Reichweite und einen kleineren Detektionsbereich des Sensors. Vorteilhaft kann die erfindungsgemäße Vorrichtung Bestandteil eines PSL-Systems des einzuparkenden Fahrzeugs sein und/oder mit einem System zum semi-autonomen Einparken des Fahrzeugs zusammenarbeiten. Vorzugsweise sind insgesamt vier jeweils einen Bereich seitlich des Fahrzeugs erfassende abstandsmessende Sensoren vorgesehen. Von besonderem Vorteil ist, dass sowohl mit dem erfindungsgemäßen Verfahren, das sich im Übrigen insbesondere zum Betreiben der erfindungsgemäßen Vorrichtung eignet, als auch mit der erfindungsgemäßen Vorrichtung zuverlässig sämtliche Objekte im Bereich der Parklücke erkannt werden, und zwar unabhängig davon, ob diese Objekte in einem Nahbereich oder einem Fernbereich bezogen auf das vorbeifahrende Fahrzeug angeordnet sind. Diese Objekte können sowohl die Parklücke begrenzende Parklückenbegrenzungsobjekte als auch in der Parklücke stehende, eine Versperrung bildende Objekte sein.

Eine vorteilhaft einfache Einstellbarkeit der Empfindlichkeit des zweiten Sensors erhält man, wenn eine Abtastrate des zweiten Sensors in Abhängigkeit von dem Messergebnis des ersten Sensors einstellbar ist.

Vorzugsweise kann der in einer Vorwärtsfahrtrichtung des Fahrzeugs vorne angeordnete Sensor eine geringere maximale Reichweite aufweisen als der hinten angeordnete Sensor, so dass mit dem vorne angeordneten Sensor der dem an der Parklücke vorbeifahrenden Fahrzeug zugewandte Nahbereich der Parklücke untersucht werden kann, wohingegen der hinten angeordnete Sensor die gesamte Tiefe der Parklücke erfassen kann. Besonders vorteilhaft kann dadurch unter Berücksichtigung des Umstandes, dass das Fahrzeug regelmäßig vorwärts an der Parklücke zu deren Vermessen vorbeifährt, der vorne am Fahrzeug befindliche Sensor von einfacherer und kostengünstigerer Bauart sein als der hinten am Fahrzeug befindliche.

Hingegen ist es für eine möglichst große Flexibilität der erfindungsgemäßen Vorrichtung von besonderem Vorteil, wenn die Sensoren jeweils eine gleiche maximale Reichweite aufweisen.

Für einen kostengünstigen Aufbau und eine einfache Betreibbarkeit der erfindungsgemäßen Vorrichtung ist es von Vorteil, wenn der erste Sensor eine fest eingestellte Empfindlichkeit aufweist.

Man könnte sich vorstellen, dass zumindest in einem Verkehrsumfeld, in dem Rechtsverkehr gilt, eine erfindungsgemäße Vorrichtung mit zwei Sensoren vorgesehen ist, die an der rechten Fahrzeuglängsseite angeordnet sind, wenn davon ausgegangen werden kann, dass die Mehrzahl der Einparkvorgänge am rechten Fahrbahnrand stattfindet. Hingegen ist es für eine möglichst umfangreiche Unterstützung verschiedenartigster Einparkvorgänge, und zwar sowohl auf der linken Fahrzeugseite als auch auf der rechten Fahrzeugseite des einzuparkenden Fahrzeugs, von besonderem Vorteil, wenn die zwei Sensoren an einer der beiden Fahrzeuglängsseiten angeordnet sind und wenn zwei entsprechende abstandsmessende Sensoren spiegelbildlich an der anderen Fahrzeuglängsseite in gleicher Anordnung angeordnet sind.

Eine Vorrichtung mit besonders hoher Zuverlässigkeit und Dauerhaltbarkeit erhält man vorteilhaft, wenn die die Sensoren Ultraschallsensoren oder Radarsensoren oder Lidarsensoren sind. Für niedrige Kosten und Wartungsarmut sind dabei Ultraschallsensoren besonders vorteilhaft.

Das erfindungsgemäße Verfahren ist besonders einfach und weist eine hohe Betriebssicherheit auf, wenn die Sensoren vorteilhaft nach einem Puls-Echo-Verfahren arbeiten, insbesondere kann das Verfahren ein Echolotverfahren sein.

Eine zuverlässige, einfache Einstellung der Empfindlichkeit des zweiten Sensors kann vorteilhaft auf die Weise erfolgen, dass in Abhängigkeit von der Auswertung des Messergebnisses des ersten Sensors die Abtastrate des zweiten Sensors eingestellt wird.

Das erfindungsgemäße Verfahren kann besonders verlässlich und mit einfachem Verfahrensablauf arbeiten, wenn vorteilhaft bei der Abtastung der Parklücke mittels des ersten Sensors ein Seitenabstand des Fahrzeugs zu einem Objekt im Bereich der Parklücke gemessen wird.

Dabei ist es weiterhin von besonderem Vorteil für ein einfaches Verfahren, wenn in Abhängigkeit von dem gemessenen Seitenabstand eine optimierte Messzeit des zweiten Sensors berechnet wird und wenn die berechnete Messzeit für den zweiten Sensor eingestellt wird.

Zeichnung

Ausführungsbeispiele der Erfindung sind in der Zeichnung schematisiert dargestellt und werden nachfolgend näher beschrieben, wobei sich jeweils entsprechende Elemente in allen Figuren mit gleichen Bezugszeichen versehen sind. Es zeigen

Figur 1               ein Fahrzeug mit einer Vorrichtung zur Unterstützung eines Einparkvorgangs,
Figuren 2A bis 2D    eine Einparksituation des Fahrzeugs nach Figur 1 und
Figuren 3A bis 3D    eine Einparksituation eines weiteren Fahrzeugs.

Beschreibung der Ausführungsbeispiele

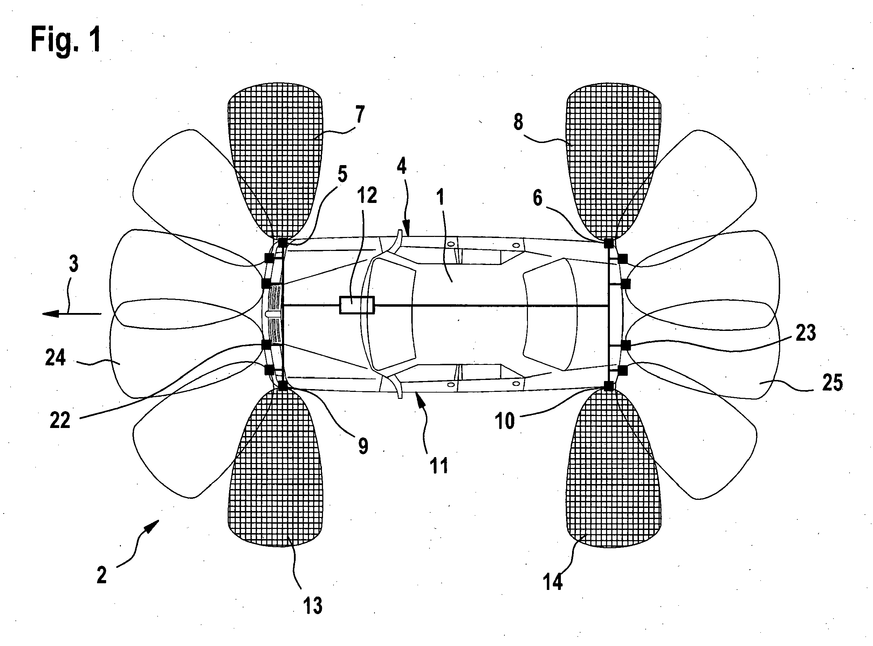

In Figur 1 ist ein als Kraftfahrzeug ausgebildetes Fahrzeug 1 mit einer eine Sensoranordnung 2 zu einem Vermessen einer Parklücke während eines Vorbeifahrens des Fahrzeugs 1 an der Parklücke aufweisenden Vorrichtung zur Unterstützung eines Einparkvorgangs des Fahrzeugs 1 in die hier nicht dargestellte Parklücke gezeigt. Die Sensoranordnung 2 weist zwei in durch einen Pfeil 3 symbolisierter, beispielhafter Fahrtrichtung, die hier eine Vorwärtsfahrtrichtung ist, hintereinander an dem Fahrzeug 1, und zwar an dessen rechter Fahrzeuglängsseite 4, angeordnete abstandsmessende, als Ultraschallsensoren ausgebildete Sensoren 5, 6 auf. Die Sensoren 5, 6, deren beispielhafter Erfassungsbereich jeweils durch eine Sensorkeule 7, 8 kenntlich gemacht ist, erfassen jeweils einen Bereich seitlich des Fahrzeugs 1. In Abhängigkeit von einem Messergebnis des in Fahrtrichtung ersten Sensors 5 ist die Empfindlichkeit des in Fahrtrichtung zweiten Sensors 6 einstellbar. Der erste Sensor 5 ist dabei ein Master-Sensor und der zweite Sensor 6 ein Slave-Sensor.

Weiterhin sind zusätzlich zwei den an der rechten Fahrzeuglängsseite 4 angeordneten Sensoren 5, 6 entsprechende Sensoren 9, 10 spiegelbildlich an der linken Fahrzeuglängsseite 11 des Fahrzeugs 1 in gleicher Anordnung angeordnet. Dementsprechend gilt auch für diese letztgenannten, an der linken Fahrzeuglängsseite 11 angeordneten Sensoren 9, 10 mit durch jeweils eine Sensorkeule 13, 14 beispielhaft kenntlich gemachten Erfassungsbereichen, dass die Empfindlichkeit des in Fahrtrichtung zweiten Sensors 10 in Abhängigkeit von einem Messergebnis des in Fahrtrichtung ersten Sensors 9 einstellbar ist. Die vier vorgenannten Sensoren 5, 6, 9, 10 sind an ein eine Auswerteeinheit 12 der Sensoranordnung 2 bildendes elektronisches Steuergerät angeschlossen.

Im unmittelbaren Frontbereich und im unmittelbaren Heckbereich des Fahrzeugs 1 sind jeweils vier weitere abstandsmessende, als Ultraschallsensoren ausgebildete und ebenfalls an die Auswerteeinheit 12 angeschlossene Sensoren 22, 23 an dem Fahrzeug 1 angeordnet, wobei die Sensorkeulen 24, 25 dieser Sensoren 22, 23 nicht seitlich, sondern im Wesentlichen nach vorne und nach hinten bezüglich des Fahrzeugs 1 ausgerichtet sind.

Beispielhaft bei einem Vorbeifahren des Fahrzeugs 1 in Vorwärtsfahrtrichtung an einer an einem rechten Fahrbahnrand angeordneten Parklücke arbeitet die Vorrichtung wie folgt: Die Parklücke wird mit dem in Fahrtrichtung ersten abstandsmessenden Sensor 5 der Sensoranordnung 2 an der rechten Fahrzeuglängsseite 4 abgetastet, ein Messergebnis des ersten Sensors 5 der Abtastung der Parklücke wird an die Auswerteeinheit 12 der Sensoranordnung 2 übermittelt, in Abhängigkeit von einer Auswertung des Messergebnisses des ersten Sensors 5 mittels der Auswerteeinheit 12 wird die Empfindlichkeit des in Fahrtrichtung zweiten, hinter dem ersten Sensor 5 an der rechten Fahrzeuglängsseite 4 angeordneten abstandsmessenden Sensors 6 der Sensoranordnung 2 eingestellt, und die Parklücke wird mit dem zweiten Sensor 6 abgetastet. Die Einstellung der Empfindlichkeit des zweiten Sensors 6 kann mittels der Auswerteeinheit 12 erfolgen.

Die Empfindlichkeit des zweiten Sensors 6 wird über dessen Messzeit verändert. Bei der hier vorliegenden Vorwärtsfahrt des Fahrzeuges 1 wird dabei die einzustellende, optimierte Messzeit des zweiten Sensors 6 in Abhängigkeit von dem Messergebnis des ersten Sensors 5 beispielhaft nach folgendem Zusammenhang bestimmt:

$$d = c \cdot t_s,$$

wobei d [cm] (Angaben in eckigen Klammern bezeichnen die jeweilige Einheit) die gemessene Entfernung des einzuparkenden Fahrzeugs 1 von einem im Bereich der Parklücke detektierten Objekt, c [m/s] die Schallgeschwindigkeit und $t_s$ [s] die optimierte Messzeit des zweiten Sensors 6 ist. Weiterhin ist zur Vermeidung von Messfehlern eine Temperaturabhängigkeit der Schallgeschwindigkeit c wie folgt zu berücksichtigen:

$$c(T) = \sqrt{\frac{\kappa \cdot \rho_0 \cdot T}{\rho_0 \cdot 273{,}15[K]}}$$

Darin ist $\kappa$ der Adiabatenkoeffizient (= 1,402), $p_0$ der Luftdruck (= 101325 Pa), T [K] die Temperatur und $\rho_0$ die mittlere Dichte der Luft unter Normalbedingungen (= 1,2935 kg/m$^3$) ist.

Damit ergibt sich die optimierte Messzeit $t_s$ gemäß

$$t_s = d \cdot \sqrt{\frac{\rho_0 \cdot 273{,}15[K]}{\kappa \cdot \rho_0 \cdot T}},$$

und die gesamte Zykluszeit für den zweiten Sensor 6, das heißt die Abtastrate des zweiten Sensors 6, ergibt sich als Summe aus Messzeit $t_s$, Nachschwingzeit $t_N$ des Sensors 6 und einer parametrierbaren Wartezeit $t_w$.

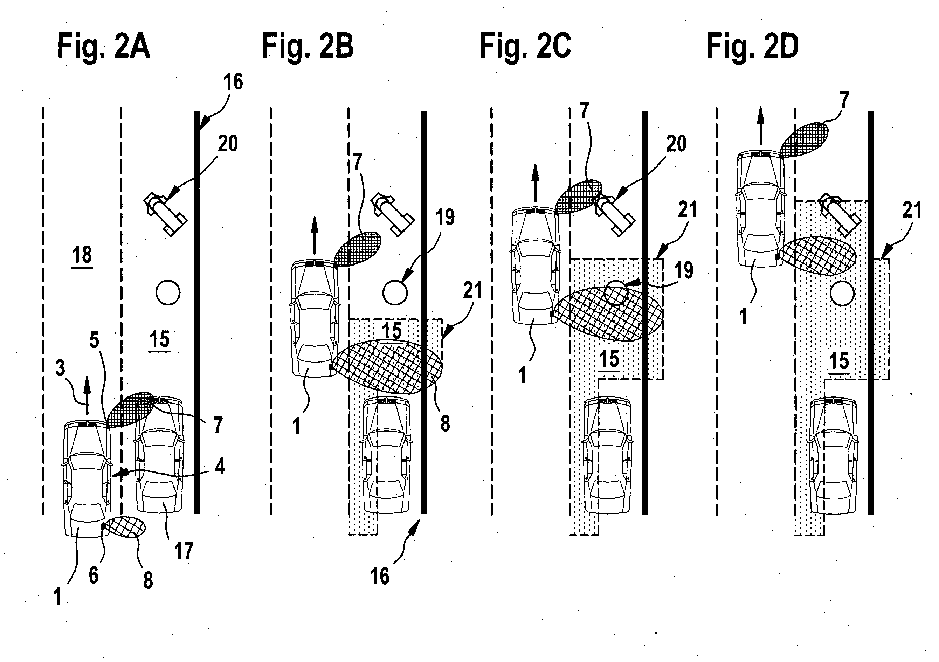

In Figuren 2A bis 2D ist ein erstes Beispiel einer Einparksituation des Fahrzeugs 1 nach Figur 1 in eine an einem rechten Fahrbahnrand 16, der beispielsweise von einem Bordstein oder einer Mauer gebildet wird, angeordnete potentielle Parklücke 15 dargestellt. Das einzuparkende Fahrzeug 1 fährt in einer durch einen Pfeil 3 symbolisierten Vorwärtsfahrtrichtung auf einer Fahrbahn 18 an einem an dem rechten Fahrbahnrand 16 bereits abgestellten, als Kraftfahrzeug ausgebildeten Fahrzeug 17, welches eine hintere Begrenzung der potentiellen Parklücke 15 bildet, vorbei.

Der in Fahrtrichtung erste Sensor 5 an der rechten Fahrzeuglängsseite 4 erfasst ebenso wie der in Fahrtrichtung zweite Sensor 6 an der Fahrzeuglängsseite 4 jeweils einen Bereich seitlich des Fahrzeugs 1. Sensorkeulen 7, 8 der Sensoren 5, 6 sind zur Verdeutlichung miteingezeichnet. Es ist zu erkennen, dass während des Vorbeifahrens des Fahrzeugs 1 an der potentiellen Parklücke 15 der erste, vordere Sensor 5 mit gleichbleibender Empfindlichkeit, ausgedrückt durch eine unveränderte Sensorkeule 7, arbeitet und einen Nahbereich des Fahrzeugs 1 erfasst. Die Empfmdlichkeit des ersten Sensors 5 ist in diesem Ausführungsbeispiel fest eingestellt.

Nachdem die Sensorkeule 7 des ersten Sensors 5 des einzuparkenden Fahrzeugs 1 das abgestellte Fahrzeug 17 passiert hat, überstreicht die Sensorkeule 7 die potentielle Parklücke 15. Es liegt kein Objekt im Messbereich des ersten Sensors 5. Von dem ersten Sensor 5 kann mithin kein Abstand zu einem Objekt gemessen werden, das Messergebnis des ersten Sensors 5 ist gleich null. Dementsprechend wird der zweite Sensor 6 so eingestellt, dass seine Reichweite maximal ist, um den von dem ersten Sensor 5 nicht berücksichtigten Fernbereich erfassen zu können. Das kommt durch eine gegenüber der Sensorkeule 7 des ersten Sensors 5 wesentlich vergrößerte Sensorkeule 8 des zweiten Sensors 8 zum Ausdruck (siehe Figur 2B).

Im weiteren Fahrtverlauf (siehe Figur 2C) erfasst der zweite Sensor 6 ein im Bereich der potentiellen Parklücke 15 angeordnetes, nahe am Fahrbahnrand 16 positioniertes rundes Objekt 19, das zum Beispiel ein Baum, ein Pfosten, ein Laternenpfahl oder eine Litfaßsäule sein kann. Gleichzeitig wird in diesem Ausführungsbeispiel von dem vorderen Sensor 5 ein Kraftrad 20 im Nahbereich des Fahrzeugs 1 erfasst. Aufgrund dieses Messergebnisses des ersten Sensors 5 wird die Empfindlichkeit des zweiten Sensors 6 entsprechend eingestellt, was durch eine verkleinerte Sensorkeule 8 des zweiten Sensors 6 im weiteren Fahrtverlauf verdeutlicht wird (siehe Figur 2D).

In Figuren 2B bis 2D ist jeweils eine insgesamt von der Sensorkeule 8 des zweiten Sensors 6 überstrichene Fläche 21 schattiert eingezeichnet. Aufgrund des innerhalb der potentiellen Parklücke 15 angeordneten, von dem zweiten Sensor 6 erfassten runden Objektes 19 wird die potentielle Parklücke 15 von der Vorrichtung zur Unterstützung eines Einparkvorgangs des Fahrzeugs 1 als nicht zum Einparken des Fahrzeugs 1 geeignet erkannt.

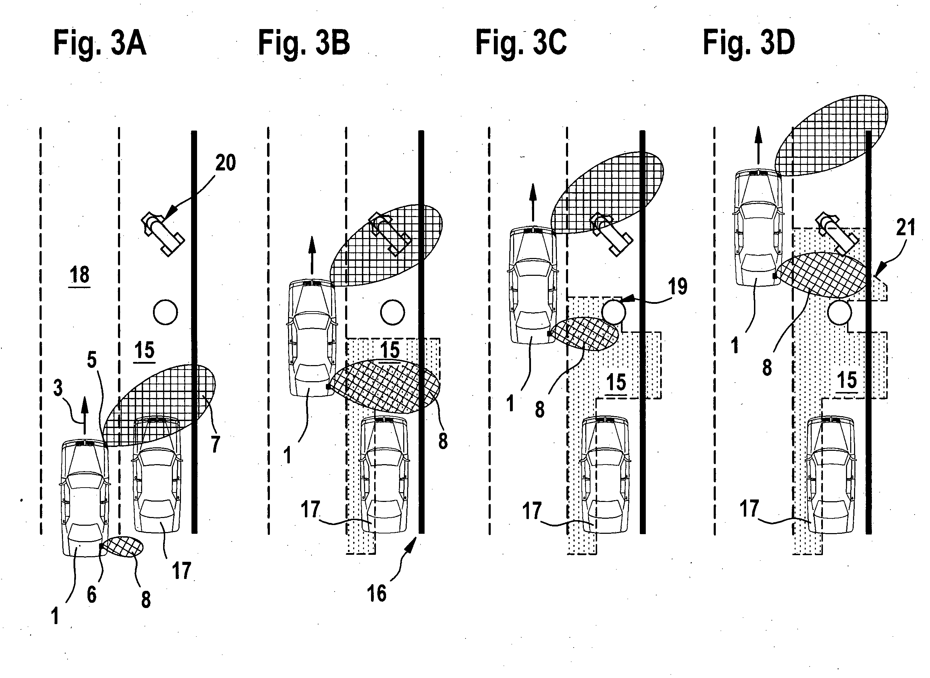

Ein zweites Beispiel einer Einparksituation eines Fahrzeugs 1, welches Fahrzeug 1 in seinem Aufbau grundsätzlich demjenigen nach Figuren 1 bis 2D entspricht, in die an dem rechten Fahrbahnrand 16 angeordnete potentielle Parklücke 15 zeigen Figuren 3A bis 3D. Die Umfeldsituation der Parklücke 15 entspricht hier derjenigen des Ausführungsbeispiels nach Figuren 2A bis 2D, das heißt ein bereits abgestelltes Fahrzeug 17 bildet eine hintere Begrenzung und ein Kraftrad 20 eine vordere Begrenzung der potentiellen Parklücke 15; im Bereich der potentiellen Parklücke 15 befindet sich zudem gleichfalls ein rundes Objekt 19.

Auch in diesem Ausführungsbeispiel weist ein in Fahrtrichtung erster Sensor 5 des Fahrzeugs 1 eine fest eingestellte Empfindlichkeit auf, jedoch weist hier der erste Sensor 5 eine vergleichsweise große Reichweite auf, ausgedrückt durch eine weit reichende Sensorkeule 7. Der erste Sensor 5 dient hier lediglich einer Groblokalisierung von Objekten im Bereich der Parklücke 15.

Zuerst (siehe Figur 3A) erfasst der erste Sensor 5 das abgestellte Fahrzeug 17 in einem Nahbereich des vorbeifahrenden und einzuparkenden Fahrzeugs 1 und misst einen Seitenabstand des vorbeifahrenden Fahrzeugs 1 zu dem abgestellten Fahrzeug 17. Infolge des dabei gewonnenen Messergebnisses wird die Empfindlichkeit eines in Fahrtrichtung zweiten Sensors 6 eingestellt, und zwar für einen Nahbereich des vorbeifahrenden Fahrzeugs 1.

Nach einem Passieren des abgestellten Fahrzeugs 17 wird die Empfindlichkeit des zweiten Sensors 6 dahingehend geändert eingestellt, dass der zweite Sensor 6 jetzt einen Fernbereich mit dem Fahrbahnrand 16 erfassen kann (siehe Figur 3B). Die Änderung der Einstellung der Empfindlichkeit des zweiten Sensors 6 beruht auf einem Messergebnis des ersten Sensors 5 an dem entsprechenden Punkt der Wegstrecke.

Entsprechend wird die Reichweite des zweiten Sensors 6 verringert, wenn er auf Höhe des runden Objektes 19 angelangt ist (siehe Figur 3C). Nachfolgend wird die Reichweite des zweiten Sensors 6 wieder erhöht, um den Fahrbahnrand 16 erfassen zu können (siehe Figur 3D). Die Reichweitenänderungen des zweiten Sensors 6 werden verursacht von einem jeweiligen Messergebnis des ersten Sensors 5 an dem entsprechenden Punkt der Wegstrecke des einzuparkenden Fahrzeugs 1. In Figuren 3B bis 3D ist jeweils eine insgesamt von der Sensorkeule 8 des zweiten Sensors 6 überstrichene Fläche 21 schattiert eingezeichnet.

Aufgrund des innerhalb der potentiellen Parklücke 15 angeordneten, von dem ersten Sensor 5 und dem zweiten Sensor 6 erfassten runden Objektes 19 wird die potentielle Parklücke 15 von der Vorrichtung zur Unterstützung eines Einparkvorgangs des Fahrzeugs 1 als nicht zum Einparken des Fahrzeugs 1 geeignet erkannt. Somit wird unabhängig von der unterschiedlichen Sensorkonfiguration der Ausführungsbeispiele nach Figuren 2A bis 2D und Figuren 3A bis 3D das gleiche, zutreffende Ergebnis erzielt.

## Patentansprüche

1. Vorrichtung zur Unterstützung eines Einparkvorgangs eines Fahrzeugs, insbesondere eines Kraftfahrzeugs, in eine Parklücke mit einer zwei in Fahrtrichtung hintereinander an dem Fahrzeug angeordnete, einen Bereich seitlich des Fahrzeugs erfassende abstandsmessende Sensoren aufweisenden Sensoranordnung zu einem Vermessen der Parklücke während eines Vorbeifahrens des Fahrzeugs an der Parklücke, **dadurch gekennzeichnet, dass** die Empfindlichkeit des in Vorwärts-Fahrtrichtung hinten angeordneten zweiten Sensors (6) in Abhängigkeit von einem Messergebnis des in Vorwärts-Fahrtrichtung vorne angeordneten, ersten Sensors (5) eingestellt wird.

2. Vorrichtung nach Anspruch 1, **dadurch gekennzeichnet, dass** eine Abtastrate des zweiten Sensors (6) in Abhängigkeit von dem Messergebnis des ersten Sensors (5) eingestellt wird.

3. Vorrichtung nach Anspruch 1 oder 2, **dadurch gekennzeichnet, dass** der erste Sensor (5) eine geringere maximale Reichweite aufweist als der zweite Sensor (6).

4. Vorrichtung nach Anspruch 1 oder 2, **dadurch gekennzeichnet, dass** die Sensoren (5, 6) jeweils eine gleiche maximale Reichweite aufweisen.

5. Vorrichtung nach einem der vorhergehenden Ansprüche **dadurch gekennzeichnet, dass** der erste Sensor (5) eine fest eingestellte Empfindlichkeit aufweist.

6. Vorrichtung nach einem der vorhergehenden Ansprüche, **dadurch gekennzeichnet, dass** die zwei Sensoren (5, 6) an einer der beiden Fahrzeuglängsseiten (4) angeordnet sind und dass zwei entsprechende abstandsmessende Sensoren (9, 10) spiegelbildlich an der anderen Fahrzeuglängsseite (11) in gleicher Anordnung angeordnet sind.

7. Vorrichtung nach einem der vorhergehenden Ansprüche, **dadurch gekennzeichnet, dass** die Sensoren (5, 6, 9, 10) Ultraschallsensoren oder Radarsensoren oder Lidarsensoren sind.

8. Verfahren zur Unterstützung eines Einparkvorgangs eines Fahrzeugs, insbesondere eines Kraftfahrzeugs, in eine Parklücke, wobei die Parklücke während eines Vorbeifahrens des Fahrzeugs an der Parklücke von einer Sensoranordnung vermessen wird, **dadurch gekennzeichnet, dass**

- die Parklücke (15) mit einem in Vorwärts-Fahrtrichtung vorne angebrachten, ersten abstandsmessenden Sensor (5) der Sensoranordnung (2) abgetastet wird,
- ein Messergebnis des ersten Sensors (5) der Abtastung der Parklücke (15) an eine Auswerteeinheit (12) der Sensoranordnung (2) übermittelt wird.
- in Abhängigkeit von einer Auswertung des Messergebnisses eine Empfindlichkeit eines in Vorwärts-Fahrtrichtung hinten angebrachten, zweiten Sensors (6) der Sensoranordnung (2) eingestellt wird und
- die Parklücke (15) mit dem zweiten Sensor (6) abgetastet wird.

9. Verfahren nach Anspruch 8, **dadurch gekennzeichnet, dass** die Sensoren (5, 6, 9, 10) nach einem Puls-Echo-Verfahren arbeiten.

10. Verfahren nach Anspruch 8 oder 9, **dadurch gekennzeichnet, dass** in Abhängigkeit von der Auswertung des Messergebnisses des ersten Sensors (5) die Abtastrate des zweiten Sensors (6) eingestellt wird.

11. Verfahren nach einem der Ansprüche 8 bis 10, **dadurch gekennzeichnet, dass** bei der Abtastung der Parklücke (15) mittels des ersten Sensors (5) ein Seitenabstand des Fahrzeugs (1) zu einem Objekt (19) im Bereich der Parklücke (15) gemessen wird.

12. Verfahren nach Anspruch 11, **dadurch gekennzeichnet, dass** in Abhängigkeit von dem gemessenen Seitenabstand eine optimierte Messzeit des zweiten Sensors (6) berechnet wird und dass die berechnete Messzeit für den zweiten Sensor (6) eingestellt wird.

**Claims**

1. Apparatus for assisting with a process of parking a vehicle, in particular a motor vehicle, in a parking space, with a sensor arrangement having two distance-measuring sensors, which are arranged behind one another on the vehicle in the direction of travel and sense a region to the side of the vehicle, for the purpose of measuring the parking space while the vehicle travels past the parking space, **characterized in that** the sensitivity of the second sensor (6) arranged at the rear in the forward direction of travel is set on the basis of a measurement result from the first sensor (5) arranged at the front in the forward direction of travel.

2. Apparatus according to Claim 1, **characterized in that** a scanning rate of the second sensor (6) is set on the basis of the measurement result from the first sensor (5).

3. Apparatus according to Claim 1 or 2, **characterized in that** the first sensor (5) has a shorter maximum range than the second sensor (6).

4. Apparatus according to Claim 1 or 2, **characterized in that** the sensors (5, 6) each have the same maximum range.

5. Apparatus according to one of the preceding claims, **characterized in that** the first sensor (5) has a permanently set sensitivity.

6. Apparatus according to one of the preceding claims, **characterized in that** the two sensors (5, 6) are arranged on one of the two vehicle longitudinal sides (4), and **in that** two corresponding distance-measuring sensors (9, 10) are arranged in a mirror-image manner on the other vehicle longitudinal side (11) in the same arrangement.

7. Apparatus according to one of the preceding claims, **characterized in that** the sensors (5, 6, 9, 10) are ultrasonic sensors or radar sensors or lidar sensors.

8. Method for assisting with a process of parking a vehicle, in particular a motor vehicle, in a parking space, the parking space being measured by a sensor arrangement while the vehicle travels past the parking space, **characterized in that**

- the parking space (15) is scanned using a first distance-measuring sensor (5) of the sensor arrangement (2), which sensor is fitted at the front in the forward direction of travel,

- a measurement result from the first sensor (5) relating to the scanning of the parking space (15) is transmitted to an evaluation unit (12) of the sensor arrangement (2),
- a sensitivity of a second sensor (6) of the sensor arrangement (2), said sensor being fitted at the rear in the forward direction of travel, is set on the basis of evaluation of the measurement result, and
- the parking space (15) is scanned using the second sensor (6).

9. Method according to Claim 8, **characterized in that** the sensors (5, 6, 9, 10) operate according to a pulse-echo method.

10. Method according to Claim 8 or 9, **characterized in that** the scanning rate of the second sensor (6) is set on the basis of the evaluation of the measurement result from the first sensor (5).

11. Method according to one of Claims 8 to 10, **characterized in that**, during scanning of the parking space (15) using the first sensor (5), a lateral distance between the vehicle (1) and an object (19) in the region of the parking space (15) is measured.

12. Method according to Claim 11, **characterized in that** an optimized measuring time of the second sensor (6) is calculated on the basis of the measured lateral distance, and **in that** the calculated measuring time is set for the second sensor (6).

**Revendications**

1. Dispositif d'assistance d'une manoeuvre d'entrée en stationnement d'un véhicule, notamment d'un véhicule automobile, dans un emplacement de stationnement comprenant un arrangement de détection qui présente deux capteurs de télémétrie captant une zone latérale du véhicule montés l'un derrière l'autre sur le véhicule dans le sens du déplacement pour une mesure de l'emplacement de stationnement pendant un passage du véhicule à côté de l'emplacement de stationnement, **caractérisé en ce que** la sensibilité du deuxième capteur (6), disposé à l'arrière dans le sens de la marche avant, est réglée en fonction du résultat d'une mesure du premier capteur (5), disposé à l'avant dans le sens de la marche avant.

2. Dispositif selon la revendication 1, **caractérisé en ce qu'**une fréquence de balayage du deuxième capteur (6) est réglée en fonction du résultat de la mesure du premier capteur (5).

3. Dispositif selon la revendication 1 ou 2, **caractérisé en ce que** le premier capteur (5) présente une portée maximale plus petite que le deuxième capteur (6).

4. Dispositif selon la revendication 1 ou 2, **caractérisé en ce que** les capteurs (5, 6) présentent respectivement une portée maximale identique.

5. Dispositif selon l'une des revendications précédentes, **caractérisé en ce que** le premier capteur (5) présente une sensibilité réglée fixe.

6. Dispositif selon l'une des revendications précédentes, **caractérisé en ce que** les deux capteurs (5, 6) sont disposés sur l'un des deux côtés longitudinaux du véhicule (4) et **en ce que** deux capteurs de télémétrie (9, 10) correspondants sont disposés en miroir dans le même arrangement de l'autre côté longitudinal du véhicule (11).

7. Dispositif selon l'une des revendications précédentes, **caractérisé en ce que** les capteurs (5, 6, 9, 10) sont des capteurs à ultrasons ou des capteurs radar ou des capteurs lidar.

8. Procédé d'assistance d'une manoeuvre d'entrée en stationnement d'un véhicule, notamment d'un véhicule automobile, dans un emplacement de stationnement, l'emplacement de stationnement étant mesuré par un arrangement de détection pendant un passage du véhicule à côté de l'emplacement de stationnement, **caractérisé en ce que**

- l'emplacement de stationnement (15) est balayé avec un premier capteur de télémétrie (5) de l'arrangement de détection (2), disposé à l'avant dans le sens de la marche avant,
- le résultat d'une mesure du premier capteur (5) du balayage de l'emplacement de stationnement (15) est communiqué à une unité d'interprétation (12) de l'arrangement de détection (2),

- suivant une interprétation du résultat de la mesure, une sensibilité d'un deuxième capteur (6) de l'arrangement de détection (2), disposé à l'arrière dans le sens de la marche avant, est réglée et
- l'emplacement de stationnement (15) est balayé avec le deuxième capteur (6).

9. Procédé selon la revendication 8, **caractérisé en ce que** les capteurs (5, 6, 9, 10) fonctionnent selon le procédé de l'écho d'impulsion.

10. Procédé selon la revendication 8 ou 9, **caractérisé en ce que** la fréquence de balayage du deuxième capteur (6) est réglée en fonction de l'interprétation du résultat de la mesure du premier capteur (5).

11. Procédé selon l'une des revendications 8 à 10, **caractérisé en ce que** lors du balayage de l'emplacement de stationnement (15) au moyen du premier capteur (5), un espacement latéral du véhicule (1) par rapport à un objet (19) dans la zone de l'emplacement de stationnement (15) est mesuré.

12. Procédé selon la revendication 11, **caractérisé en ce qu'**un temps de mesure optimisé du deuxième capteur (6) est calculé en fonction de l'espacement latéral mesuré et **en ce que** le temps de mesure calculé est réglé pour le deuxième capteur (6).

Fig. 1

EP 1 934 630 B1

Fig. 2A    Fig. 2B    Fig. 2C    Fig. 2D

# Fig. 3A   Fig. 3B   Fig. 3C   Fig. 3D

EP 1 934 630 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10339645 A1
- EP 1484620 A1
- EP 0305907 A1
- DE 10320723 A1